# EUROPÄISCHE PATENTSCHRIFT

(11) **EP 0 565 533 B1**
(45) Veröffentlichungstag und Bekanntmachung des Hinweises auf die Patenterteilung: **28.05.1997**
(21) Anmeldenummer: 92900157.6
(22) Anmeldetag: 10.12.1991
(51) Int. Cl.: B01D 53/34, B01D 53/14

(54) **VERFAHREN ZUR SELEKTIVEN HF-ABTRENNUNG AUS EINEM HF UND HCl UND GEGEBENENFALLS ANDERE KOMPONENTEN ENTHALTENDEN GAS**
PROCESS FOR SELECTIVELY SEPARATING HF FROM A GAS CONTAINING HF AND HCl AND POSSIBLY OTHER COMPONENTS
PROCEDE DE SEPARATION SELECTIVE DU HF CONTENU DANS UN GAZ CONTENANT DU HF, DU HCl ET LE CAS ECHEANT D'AUTRES COMPOSANTS

(30) Priorität: 20.12.1990 DE 4040912
(43) Veröffentlichungstag der Anmeldung: 20.10.1993
(73) Patentinhaber: L. & C. Steinmüller GmbH, D-51641 Gummersbach (DE)
(72) Erfinder: KUCIEL, Eugeniusz, D-5226 Reichshof-Hespert (DE); KUBISA, Ryszard, D-5270 Gummersbach 31 (DE); HOLSTE, Reinhard, D-5270 Gummersbach 1 (DE)
(74) Vertreter: Carstens, Wilhelm, Dipl.-Phys.
(86) Internationale Anmeldenummer: EP9102365
(87) Internationale Veröffentlichungsnummer: WO9211076

(56) Entgegenhaltungen:
- EP-A- 0 425 922
- DE-A- 3 124 671
- US-A- 3 140 916
- US-A- 4 154 804

## Beschreibung

Die Erfindung betrifft ein Verfahren zur selektiven HF-Abtrennung aus einem HF und HCl und gegebenenfalls andere Komponenten enthaltenden Abgas einer Verbrennungsanlage, insbesondere Abgas einer Müllverbrennungsanlage, bei dem das Abgas zunächst mit Wasser als Waschflüssigkeit zum gemeinsamen Auswaschen von HF und HCl behandelt wird und danach Fluor mittels einer mindestens CaCl₂ - haltigen Lösung entfernt wird.

Abgase von Feuerungsanlagen, insbesondere Müllverbrennungsanlagen, erhalten zwar absolut gesehen große Mengen an HCl, jedoch in einem wesentlich geringeren Anteil als die Abgase aus der Herstellung von Chlor-Fluor-Kohlenwasserstoffen. Andererseits enthalten sie noch einen so hohen HF-Anteil, daß dieser entfernt werden muß, um zu einer vermarktungsfähigen Salzsäure zu gelangen. Typische Konzentrationswerte im Rauchgas hinter einer Müllverbrennungsanlage sind:
HF = 20 mg/m³ i.N.t.r. und HCl = 1100 mg/m³ i.N.t.r.. Hinzu kommen noch SO_{X} = 400 mg/m³.

Aus der EP-A-425 922 ist es bekannt, aus einem Abgas einer Müllverbrennungsanlage mit hohem Chloridgehalt in einer Vorstufe die stark sauren Bestandteile des Abgases wie HCl und HF mit Wasser auszuwaschen, wobei bereits in der Vorstufe eine Aufkonzentration der Salzsäure erfolgt. Die so erhaltene verdünnte Salzsäure wird durch Rektifikation in konzentrierte Salzsäure und eine Sumpffraktion aufgetrennt. Um HF aus der weiter aufkonzentrierten Salzsäure zu entfernen, wird diese einem weiteren thermischen Trennprozeß unter Zusatz von gelösten fluoridbindenden Zusätzen unterworfen, z. B. einer Fallfilmverdampfung mit nachgeschaltetem Aktivkohlefilter und Trennkolonne, damit eine Salzsäure mit einem vermarktungsfähigen Gehalt an HF erzielt wird.

Weiterhin ist aus der US-A-4,154,804 ein Verfahren bekannt, bei dem der Abgasstrom einer Müllverbrennungsanlage mit einer wäßrigen Lösung behandelt wird, die Calciumchlorid und Chlorwasserstoff in hoher Konzentration enthält. Dabei wird offengelassen, wie der Wertstoff HCl gewonnen werden soll.

Aus der DE-A-31 24 671 ist ein Verfahren zum selektiven Abscheiden von Chloriden und Fluoriden aus Rauchgasen bekannt, wobei das Gas mit einer calciumchloridhaltigen Waschlösung gewaschen wird. Dabei wird die Calciumchloridkonzentration so hoch eingestellt, daß die Bildung von CaSO₄·H₂O unterdrückt wird. Ein Abzug einer wäßrigen Lösung von HCl als verwertbares Produkt wird nicht angestrebt. Vielmehr wird Chlor in Form eines Abwasserstroms mit hoher Calciumchloridkonzentration abgezogen.

Aus der US-A-3,140,916 ist ein Verfahren bekannt, bei dem aus dem HF und HCl enthaltenden Abgas eines Chlor-Fluor-Kohlenwasserstoff-Herstellungsprozesses HCl und HF abgetrennt werden sollen. Zu diesem Zwecke wird das HCl und HF enthaltende Abgas einer Wäsche mit verdünnter Salzsäure unterzogen. Die Waschlösung, die HCl in überazeotroper Konzentration enthält, wird einer Strippkolonne zugeführt, bei der als Kopfprodukt wasserfreies gasförmiges HCl abgezogen wird. Im Sumpf der Kolonne stellt sich eine Flüssigkeit mit einem Gehalt von 0,75-5 Gew.-% HF ein. Diese Lösung bestehend aus Wasser, gelöstem HF und einem HCl-Gehalt in mehr als azeotropischer Konzentration wird nach Kühlung einer Kristallisationseinrichtung zugeführt. Der Kristallisationseinrichtung wird CaCl₂ in unterstöchiometrischer Menge zugeführt derart, daß in der behandelten Lösung wenigstens ein Gehalt von 1 Gew.-% HF verbleibt.

Es ist die Aufgabe der vorliegenden Erfindung, ein Verfahren der gattungsgemäßen Art anzugeben, bei dem auf verfahrenstechnisch einfache Weise eine selektive Abtrennung von HF aus dem HF und HCL und gegebenenfalls andere Komponenten enthaltenden Abgas einer Verbrennungsanlage erreicht wird.

Diese Aufgabe wird dadurch gelöst, daß aus der HF- und HCl-haltigen Waschflüssigkeit HF und HCl in Gasform ausgetrieben werden und das ausgetriebene Gas mit einer CaCl₂-haltigen Lösung mit einem bezogen auf den Fluorgehalt der Lösung überstöchiometrischen Gehalt an CaCl₂ in einem Wäscher gewaschen und dabei HF aus dem System CaCl₂ - CaF₂ - HCl - H₂O ausgefällt wird und dann das den Wäscher verlassende HCl-haltige Gas einer mit Wasser beaufschlagten HCl-Absorptionsstufe zugeführt wird.

Bei dieser Verfahrensführung wird durch aufeinanderfolgende Waschstufen mit zwischengeschalteter Austreibestufe eine Entfernung des Fluors auf verfahrenstechnisch einfache Weise unter gleichzeitiger Erzielung einer vermarktungsfähigen HCl erreicht.

Während bei der Verfahrensführung gemäß der US-A-3,140,916 eine CaCl₂ in unterstöchiometrisher Menge enthaltende wäßrige Lösung einer HCl - H₂O - HF enthaltenden Flüssigkeit in einer Kristallisationseinrichtung zugegeben wird, und aus der Kristallisationseinrichtung eine noch mindestens 1 Gew.-% HF enthaltende Flüssigkeit abgezogen wird, erfolgt bei der erfindungsgemäßen Verfahrensführung die Behandlung eines HCl - H₂O - HF enthaltenden Gases mit einer eine überstöchiometrische Menge an Calciumchlorid enthaltenden wäßrigen Lösung, die z.B. 30 Gew.-% CaCl₂ enthält. Das erfindungsgemäße Verfahren geht somit von der Erkenntnis aus, daß eine Calciumchlorid in überstöchiometrischer Menge und freie Salzsäure enthaltende Lösung aus einem Gas das HF auswaschen kann, während das HCl die Waschstufe passiert und in dieser Lösung der Fluor-Wasserstoff mit den Calcium-Ionen reagieren kann. Auf diese Weise ist es möglich, aus einem HF- und HCl-haltigen Gas das HF selektiv abzutrennen und aus der Waschflüssigkeit auszufällen. In der Flüssigkeit verbleiben das Calciumchlorid und die ausgewaschenen Schwermetalle.

Vorzugsweise liegt der Gehalt an CaCl₂ in der Waschflüssigkeit zwischen 10 Gew.-% und 55 Gew.-%. In diesem Bereich wird wiederum bevorzugt der Bereich von 25 Gew.-% und 40 Gew.-%.

Besonders gute Ergebnisse werden erzielt, wenn der Gehalt an CaCl₂ in der Waschflüssigkeit 30 Gew.-% beträgt.

Der pH-Wert der CaCl₂-haltigen Lösung ist vorzugsweise kleiner pH = 2,2 und liegt wiederum bevorzugt im Bereich kleiner pH = 2,0.

Wenn das Abgas der Verbrennungsanlage noch SO₂ enthält, erfolgt die gemeinsame Auswäsche von HCl und HF so, daß keine wesentliche Menge von SO₂ mit ausgewaschen wird. Die Auswäsche von SO₂ erfolgt in einer nachfolgenden Wäsche mit einer zumindest Ca-haltigen Waschflüssigkeit unter Erzeugung von Gips. Es wird also dafür Sorge getragen, daß in der Waschstufe für HF und HCl nicht SO₂ mit ausgewaschen wird.

Der CaCl₂-Gehalt in der Waschlösung wird entweder durch Verwendung einer wäßrigen Lösung von CaO, Ca(OH)₂ und CaCO₃ in Wasser unter Bildung von CaCl₂ mit im Gas vorhandenen HCl eingebracht oder der CaCl₂-Gehalt in der Waschlösung wird zusätzlich oder alleine durch direktes Einbringen von CaCl₂ in die Waschlösung erreicht.

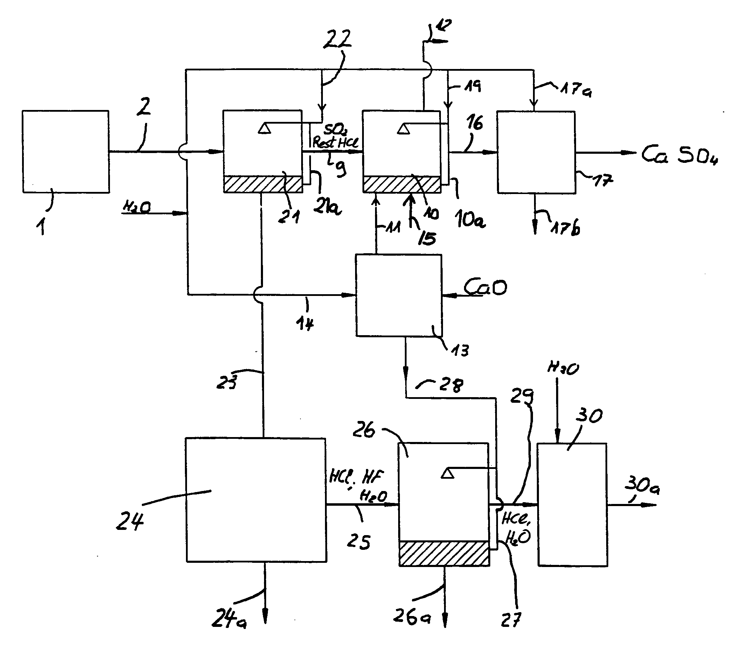

Die Erfindung soll nun anhand der beigefügten Figur näher erläutert werden.

Das die Müllverbrennungsanlage 1 verlassende Abgas 2 enthält neben anderen Komponenten HF, HCl und SO₂.

Das Abgas 2 wird einem ersten Wäscher 21 mit einem Kreislauf 21a zugeführt, in dem das Rauchgas mit über Leitung 22 herangeführtem Wasser (H₂O) als Waschflüssigkeit behandelt wird. Das im wesentlichen von HCl befreite und mit Wasserdampf gesättigte Gas 9 wird in einen Wäscher 10 mit einem Kreislauf 10a eingeleitet, in dem es zur Entfernung von SO₂ mit einer calciumhaltigen Waschflüssigkeit behandelt wird, die über Leitung 11 herangeführt wird. Aus dem Wäscher 10 wird das Reingas über Leitung 12 abgeleitet.

Die Waschflüssigkeit 11 wird durch Löschung von CaO in einem Kalklöscher 13 mit über Leitung 14 zugeführtem Wasser erzeugt. Durch Zufuhr von Luft 15 wird in dem Wäscher Gips erzeugt. Aus dem Wäscher 10 wird eine gipshaltige Flüssigkeit über Leitung 16 abgezogen und einer Gipsentwässerung 17 zugeführt. Durch Zufuhr von Ca-haltiger Waschflüssigkeit zum Wäscher 10 und durch das Vorhandensein eines Restgehalts an HCl im Rauchgas 9 kommt es zur Bildung von Calciumchlorid. Dieses Calciumchlorid kann bei der Gipsentwässerung mit dem Abwasser 17b mit geringem Gehalt an Calcium-Ionen abgezogen werden und als Waschwasser dem Kreislauf des ersten Wäschers 21 zugeführt werden. Über Leitungen 19 und 17a kann dem Wäscher 10 bzw. der Gipsentwässerung 17 Waschwasser zugeführt werden.

Die aus dem Wäscher 21 abgezogene Waschflüssigkeit wird über Leitung 23 einer Einrichtung 24 zugeführt, in der HCl und HF zusammen mit Wasserdampf in Gasform ausgetrieben werden. Das ausgetriebene Gas 25 mit einem Gehalt von nahezu 80 bis 95 Gew.-% gasförmigem HCl, nahezu 5 bis 20 Gew.-% Wasserdampf und einer kleinen Menge von gasförmigem HF wird einem Wäscher 26 zugeführt, in dem das Gas mit einer bezogen auf den Fluorgehalt überstöchiometrischen Menge an CaCl₂-haltigen und im Kreislauf 27 geführt Waschflüssigkeit behandelt wird. Zu diesem Zwecke wird von dem für die Entschwefelung vorgesehenen Kalklöscher 13 über Leitung 28 eine Ca-haltige Flüssigkeit dem Wäscher 26 zugeführt. Wegen des im Gas 25 enthaltenen HCl kommt es in der Waschflüssigkeit des Wäschers 26 zur Bildung von CaCl₂.

Es wird soviel Calcium zugeführt, daß sich Calciumchlorid in überstöchiometrischer Menge bezogen auf den Fluorgehalt der Waschflüssigkeit bildet. Das den Wäscher 26 verlassende Gas 29, das im wesentlichen ein Gemisch aus HCl und H₂O ist, wird einer HCl-Absorptionsstufe 30 zugeführt, der Wasser zugeführt wird und mit deren Hilfe Salzsäure mit einer höheren Konzentration erzeugt wird, vorzugsweise mit einer Konzentration über 30 Gew.-%, gegenüber der auf Leitung 23 aus dem Wäscher 21 abgezogenen unterazeotropen HCl mit einem Gehalt von z.B. 10 Gew.-%.

Aus dem Wäscher 26 wird wiederum ein Gemisch aus gelöstem Calciumchlorid und CaF₂ als Feststoff über Leitung 26a ausgeschleust. Aus der Einrichtung 24 wird über Leitung 24a eine Lösung enthaltende ausgewaschene Schwermetalle und Rest-HCl abgezogen und einer weiteren Verarbeitung zugeführt.

Die Temperatur der Waschflüssigkeit im Wäscher 26 sollte zwischen 25 bis 70 °C liegen. Der pH-Wert sollte kleiner als 2 sein, und die Calciumionen-Konzentration sollte im Bereich von 10 bis 55 Gew.-% liegen.

## Patentansprüche

1. Verfahren zur selektiven HF-Abtrennung aus einem HF und HCl und gegebenenfalls andere Komponenten enthaltenden Abgas einer Verbrennungsanlage (1), insbesondere Abgas einer Müllverbrennungsanlage, bei dem das Abgas zunächst mit Wasser als Waschflüssigkeit zum gemeinsamen Auswaschen von HF und HCl behandelt wird und danach Fluor mittels einer mindestens CaCl₂ - haltigen Lösung entfernt wird
**dadurch gekennzeichnet**, daß
aus der HF- und HCl-haltigen Waschflüssigkeit HF und HCl in Gasform ausgetrieben werden und das ausgetriebene Gas (25) mit einer CaCl₂-haltigen Lösung mit einem bezogen auf den Fluorgehalt der Lösung überstöchiometrischen Gehalt an CaCl₂ in einem Wäscher (26) gewaschen und dabei HF aus dem System CaCl₂ - CaF₂ - HCl - H₂O ausgefällt wird und dann das den Wäscher (26) verlassende HCl-haltige Gas einer mit Wasser beaufschlagten HCl-Apsorptionsstufe (30) zugeführt wird.

2. Verfahren nach Anspruch 1,
**dadurch gekennzeichnet**, daß der Gehalt an CaCl₂ in der Waschflüssigkeit zwischen 10 Gew.-% und 55 Gew.-%, bevorzugt zwischen 25 Gew.-% und 40 Gew.-% liegt.

3. Verfahren nach Anspruch 1 oder 2,
**dadurch gekennzeichnet**, daß der pH-Wert der CaCl₂ - haltigen Lösung kleiner pH = 2,2, bevorzugt im Bereich kleiner pH = 2,0 liegt.

4. Verfahren nach einemn der Ansprüche 1 - 3,
**dadurch gekennzeichnet**, daß der bei einem SO₂-haltigen Abgas der Verbrennungsanlage (1) die gemeinsame Auswäsche von HCl und HF so erfolgt, daß keine wesentliche Menge von SO₂ ausgewaschen wird, und danach das Gas mit einer mindest Ca-haltigen Waschflüssigkeit unter Erzeugung von Gips behandelt wird.

5. Verfahren nach einem der Ansprüche 1 bis 4,
**dadurch gekennzeichnet**, daß der CaCl₂-Gehalt in der Waschlösung durch Verwendung einer wäßrigen Lösung von CaO, Ca(OH)₂ und CaCO₃ in Wasser unter Bildung von CaCl₂ mit im Gas vorhandenen HCl eingebracht wird oder der CaCl₂-Gehalt zusätzlich oder alleine durch direktes Einbringen von CaCl₂ in die Waschlösung erreicht wird.

6. Verfahren nach einem der Ansprüche 1 bis 5,
**dadurch gekennzeichnet,** daß die Temperatur der Calciumchlorid-haltigen Waschflüssigkeit im Bereich von 25 bis 70°C liegt.

## Claims

1. Process for selectively separating HF from a flue gas of a combustion plant (1) containing HF and HCl and possibly other components,
especially flue gas of a waste combustion plant, in which the flue gas is first treated with water as a washing liquid for the common wash out of HF and HCl and thereafter fluorine is removed by means of an at least CaCl₂ containing solution,
characterized in that HF and HCl are expelled in gas form from the HF-and HCl containing washing liquid and that the expelled gas (25) is washed in a washer (26) with a CaCl₂ containing solution having a superstoichiometric CaCl₂ content in relation to the fluorine content of the solution and therewith the HF is precipitated from the system CaCl₂-CaF₂-HCl-H₂O and thereafter the HCl containing gas leaving the washer (26) is led to an Hcl-absorption stage (30) being supplied with water.

2. Process according to claim 1,
characterized in that the content of CaCl₂ in the washing liquid is in the range between 10 wt.-% and 55 wt.-%, preferably between 25 wt.-% and 40 wt.-%.

3. Process according to claim 1 or 2,
characterized in that the pH-value of the CaCl₂ containing solution is lower than pH = 2,2, preferably lies in the range lower pH = 2,0.

4. Process according to one of the claim 1 to 3,
characterized in that in case of an SO₂-containing flue gas of the combustion plant (1) the common wash out of HCl and HF is performed so that no substantially amount of SO₂ is washed out and thereafter the gas is treated with an at least Ca-containing washing liquid with production of gypsum.

5. Process according to one of the claims 1 to 4,
characterized in that the CaCl₂ -content in the washing solution is brought in by using an aqueous solution of CaO, Ca(OH)₂ and CaO₃ in water by generating of CaCl₂ with HCl being at hand in the gas or in that the CaCl₂-content is additionally or alone achieved by the direct adding of CaCl₂ to the washing solution.

6. Process according to one of the claims 1 to 5,
characterized in that the temperature of the calcium chloride containing washing liquid lies in the range of 25 to 70°C.

## Revendications

1. Procédé pour la séparation sélective d'HF d'un gaz effluent d'une installation de combustion, contenant HF et HCl et éventuellement d'autres composants, en particulier d'un gaz effluent d'une installation d'incinération d'ordures ménagères (1), dans lequel on traite le gaz effluent tout d'abord avec de l'eau en tant que fluide de lavage pour le lavage simultané d'HF et d'HCl, et ensuite on sépare le fluor au moyen d'une solution contenant au moins CaCl₂, caractérisé en ce que HF et HCl sont expulsés du fluide de lavage contenant HF et HCl sous forme de gaz et le gaz (25) expulsé est lavé dans une colonne de lavage (26) avec un excès stoechiométrique de CaCl₂ par rapport à la teneur en fluor de la solution pour précipiter HF du système CaCl₂-CaF₂-HCl-H₂O et ensuite en ce que le gaz contenant HCl sortant de la colonne de lavage (26) est amené à un poste d'absorption (30) d'HCl alimenté avec de l'eau.

2. Procédé selon la revendication 1, caractérisé en ce que la teneur en CaCl₂ du fluide de lavage est comprise entre 10 % en poids et 55 % en poids, de préférence entre 25 % en poids et 40 % en poids.

3. Procédé selon la revendication 1 ou 2, caractérisé en ce que la valeur du pH de la solution contenant CaCl₂ est inférieure à 2,2, de préférence inférieure à 2,0.

4. Procédé selon l'une des revendications 1 à 3, caractérisé en ce que, lorsque le gaz effluent de l'installation de combustion (1) contient du SO₂, le lavage simultané de HCl et HF est conduit de manière à ce qu'aucune quantité substantielle de SO₂ ne soit entraînée par lavage, et en ce qu'ensuite le gaz est traité avec un fluide de lavage contenant au moins Ca pour l'obtention de carbonate de calcium.

5. Procédé selon l'une quelconque des revendications 1 à 4, caractérisé en ce que la teneur en CaCl₂ dans la solution de lavage est ajoutée en utilisant une solution aqueuse de CaO, Ca(OH)₂ et CaCO₃ dans de l'eau pour former du CaCl₂ avec l'HCl contenu dans le gaz ou en ce que la teneur en CaCl₂ est obtenue de façon complémentaire ou séparée par addition directe de CaCl₂ dans la solution de lavage.

6. Procédé selon l'une quelconque des revendications 1 à 5, caractérisé en ce que la température du fluide de lavage contenant du chlorure de calcium se situe dans la gamme de 25 à 70°C.
